# EUROPEAN PATENT SPECIFICATION

(11) **EP 1 273 228 B1**
(45) Date of publication and mention of the grant of the patent: **26.11.2003**
(21) Application number: 01202572.2
(22) Date of filing: 04.07.2001
(51) Int. Cl.: A01M 7/00

(54) **Spraying vehicle comprising linked spraying booms**
Sprühfahrzeug mit miteinander verbundenen Sprühbalken
Véhicule de pulvérisation avec rampes de pulvérisation liées

(43) Date of publication of application: 08.01.2003
(73) Proprietor: Kverneland ASA, 4355 Kvernaland (NO)
(72) Inventor: Beijaard, Martinus Johannes Antonius, 1566 NE Assendelft (NL)
(74) Representative: Voncken, Bartholomeus Maria Christiaan

(56) References cited:
- FR-A- 2 444 220
- FR-A- 2 559 686
- GB-A- 2 151 891
- US-A- 5 000 385

## Description

This invention relates to a spraying apparatus for connection to a vehicle, comprising a frame and a pair of spraying booms carried by and extending outwardly from that frame.

When applying spraying substances by means of such a spraying apparatus it is important to ensure an even application of the spraying substances. However, irregularities of the ground lead to disturbances of the vehicle which are transmitted to the spraying booms. These disturbances lead to an uneven spraying pattern which negatively influences the resulting yield of the ground.

One of the disturbances leading to major problems is the motion of the spraying booms in a plane substantially in parallel to the ground. Due to the large transverse dimensions of the spraying boom in modern spraying apparatus also small disturbances already will lead to substantial horizontal movements of the spraying booms. Not only do these movements lead to the above-mentioned uneven spraying pattern, but they also impose high structural stresses upon the apparatus.

Previously several attempts have been made to solve the above problems. GB-A-2.088.181 shows a spraying boom suspension system for a one-part spraying boom, comprising pivotally connected elements secured to the spraying boom and a frame, wherein one of said elements is provided with a resilient means to absorb movements between the frame and spraying boom. Although this known system provides a spraying boom with a large inertia, such that movements of the vehicle will hardly lead to corresponding movements or disturbances of the spraying boom, this known system is not fit for solving problems arising from sudden accelerations or decelerations of the vehicle. In these specific cases large constructional forces (especially bending stresses) will occur in the spraying boom.

US-A-5.000.385 teaches a spraying boom brake away apparatus in which spraying booms each are connected to a frame by means of a shock absorber. These shock absorbers may offer a solution for the problems encountered in the case of sudden accelerations and decelerations of the vehicle, but now the inertia of the provided spraying booms is relatively low, such that movements of the vehicle will have an increased effect on disturbances of the spraying booms.

A spraying apparatus according to the preamble of claim 1 has been published in GB 2 151 891.

It is an object of the present invention to provide a spraying apparatus of the type referred to above which provides a solution for the aforementioned disadvantages.

Thus, in the spraying apparatus according to the invention the spraying booms are pivotally mounted to the frame around substantially vertically extending pivot axes and the spraying booms are linked in such a way, that a pivoting motion of one of the spraying booms around its pivot axis in a rotational sense leads to a pivoting motion of the other spraying boom around its pivot axis in the opposition rotational sense.

In the event of sudden accelerations or decelerations of the vehicle the spraying booms are allowed to pivot around their pivot axis in opposite rotational senses, that means in the same direction (forward or backward) relative to the vehicle. As a result, the constructional load (such as bending stresses) on the spraying booms is substantially reduced. However, the linkage between the spraying booms couples the masses of the spraying boom leading to a large total inertia, such that movements of the vehicle will not or hardly lead to disturbances of the spraying booms. As a result an even spraying pattern is obtained.

According to a preferred embodiment of the spraying apparatus according to the invention the link between the spraying booms is configured to allow a minor independent pivoting motion of the spraying booms relative to each other. Such a minor independent pivoting motion of the spraying booms relative to each other is advantageous, because minor disturbances of the position of one of the spraying booms will not automatically lead to disturbances of the position of the other spraying boom.

In a further embodiment of the spraying apparatus according to the invention, the linkage between the spraying booms is realized in such a manner, that the spraying booms each are provided with a main boom section extending outwardly from the respective pivot axis and a boom section extending inwardly therefrom, wherein the inwardly extending boom sections are hingedly connected to each other. However, it should be emphasized, that also other mechanical or hydraulic connections between the spraying booms are conceivable for obtaining the same effect, such as interengaging gears, or alike.

In the event of hingedly connected inwardly extending boom sections, it further is possible that the inwardly extending boom sections are connected to each other through a resilient member.

Further, at least one of the spraying booms, or the inwardly extending boom sections thereof, may be connected to the frame by means of a resilient member.

Dependent upon its function, the resilient member may be one or a combination of the following elements: damping device, torsion spring, compression spring, tension spring, hydraulic and/or pneumatic member. Correspondingly, the function of the resilient member may be, among others, dampening the motion of the spraying booms themselves or relative to each other, allowing minor independent pivoting motions of the spraying booms relative to each other and pre-loading the spraying booms.

The spraying apparatus according to the invention may be of the kind, wherein the frame is releasably connected to the vehicle. In such a case, the vehicle can also be used for purposes other than spraying the ground. When, however, the frame is an integral part of the vehicle, the vehicle is a spraying vehicle.

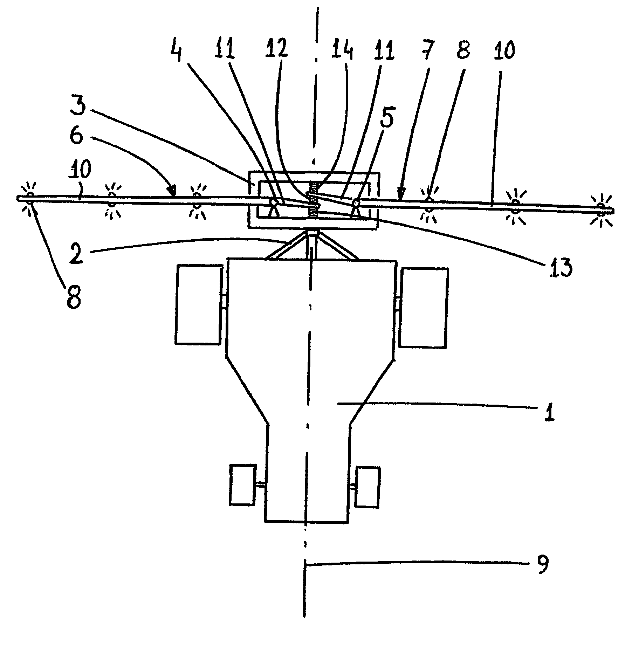

Hereinafter the invention will be elucidated referring to the drawing, in which schematically an embodiment of the spraying apparatus according to the invention is illustrated in a top plan view.

A vehicle 1, such as a tractor, comprises as its rear side a conventional suspension device 2 to which is connected a frame 3. Pivot axes 4 and 5 are attached tot the frame 3 and extend vertically, i.e. perpendicularly to the plane of the drawing.

A pair of spraying booms 6 and 7 carrying spraying nozzles 8 extend outwardly from the frame 3 in opposite directions. Although in the drawing the spraying booms 6 and 7 extend perpendicularly to the longitudinal axis 9 of the vehicle, this is not necessary. It is also imaginable, that the angle between the spraying booms 6 and 7 and the longitudinal axis 9 differs from 90°.

Spraying boom 6 is pivotally mounted to the fame 3 through the pivot axis 4, whereas spraying boom 7, in a corresponding manner, is pivotally mounted to the frame 2 through pivot axis 5.

The spaying booms 6 and 7 each are provided with a main boom section 10 extending outwardly from the respective pivot axis 4 and 5, and a boom section 11 extending inwardly therefrom. The length of the inwardly extending boom sections 11 from the pivot axis 4 and 5 is such, that these boom sections 11 overlap at the longitudinal axis 9.

The inwardly extending boom sections 11 of the spraying booms 6 and 7 are interconnected through a resilient member 12. Further, resilient members 13 and 14 are positioned between the inwardly extending boom sections 11 and corresponding parts of the frame 3.

The invention is not limited to the embodiment shown, which can be varied widely within the scope of the invention.

## Claims

1. Spraying apparatus for connection to a vehicle (1), comprising a frame (3) and a pair of spraying booms (10,11) carried by and extending outwardly from that frame (3), wherein the spraying booms (10,11) are pivotally mounted to the frame (3) around substantially vertically extending pivot axes (4,5) **characterized in that** the spraying booms (10,11) are linked in such a way, that a pivoting motion of one of the spraying booms (10,11) around its pivot axis (4,5) in a rotational sense leads to a pivoting motion of the other spraying boom (10,11) around its pivot axis (4,5) in the opposition rotational sense.

2. Spraying apparatus according to claim 1, **characterized in that** the link between the spraying booms (10,11) is configured to allow a minor independent pivoting motion of the spraying booms (10,11) relative to each other.

3. Spraying apparatus according to claim 1 or 2, **characterized in that** the spraying booms (10,11) each are provided with a main boom section (10) extending outwardly from the respective pivot axis (4,5) and a boom section (11) extending inwardly therefrom, wherein the inwardly extending boom sections (11) are hingedly connected to each other.

4. Spraying apparatus according to claims 3, **characterized in that** the inwardly extending boom sections (11) are connected to each other through a resilient member (12,14).

5. Spraying apparatus according to claim 3 or 4, **characterized in that** at least one of the spraying booms (10,11) is connected to the frame (3) by means of a resilient member (12,14).

6. Spraying apparatus according to claim 5, **characterized in that** the inwardly extending boom section (11) of at least one of the spraying booms (10,11) is connected to the frame (3) by means of a resilient member (12,14).

7. Spraying apparatus according to any of the claims 4-6, **characterized in that** the resilient member (12,14) is one or a combination of the following elements: damping device, torsion spring, compression spring, tension spring, hydraulic and/or pneumatic member.

8. Spraying apparatus according to any of the previous claims, **characterized in that** the frame (3) is releasably connected to a vehicle (1).

9. Spraying apparatus according to any of the claims 1-7, **characterized in that** the frame (3) is an integral part of a vehicle (1).

## Patentansprüche

1. Sprühvorrichtung zur Verbindung mit einem Fahrzeug (1), die umfasst: einen Rahmen (3) und ein Paar Sprühbalken (10, 11), die vom Rahmen (3) getragen werden und sich von diesem nach außen erstrecken, wobei die Sprühbalken (10, 11) drehbar auf dem Rahmen (3) um im wesentlichen sich senkrecht erstreckende Drehachsen (4,5) montiert sind,
**dadurch gekennzeichnet, dass**
die Sprühbalken (10, 11) derart verbunden sind, dass eine Drehbewegung einer der Sprühbalken (10,11) im Drehsinne um seine Drehachse (4,5) zu einer Drehbewegung des anderen Sprühbalkens (10,11) um seine Drehachse (4, 5) im entgegengesetzten Drehsinn führt.

2. Sprühvorrichtung nach Anspruch 1, **dadurch gekennzeichnet, dass** die Verbindung zwischen den Sprühbalken (10,11) so ausgeführt ist, dass eine kleine unabhängige Drehbewegung der Sprühbalken relativ zueinander möglich ist.

3. Sprühvorrichtung nach Anspruch 1 oder 2, **dadurch gekennzeichnet, dass** die Sprühbalken (10,11) einen Hauptbalkenabschnitt (10), der sich von der jeweiligen Drehachse (4, 5) nach außen erstreckt, und einen Balkenabschnitt (11), der sich von der jeweiligen Drehachse (4, 5) nach innen erstreckt, aufweisen, wobei die sich nach innen erstreckenden Balkenabschnitte (11) gelenkig miteinander verbunden sind.

4. Sprühvorrichtung nach Anspruch 3, **dadurch gekennzeichnet, dass** die sich nach innen erstreckenden Balkenabschnitte (11) durch ein elastisches Element (12, 14) miteinander verbunden sind.

5. Sprühvorrichtung nach Anspruch 3 oder 4, **dadurch gekennzeichnet, dass** mindestens einer der Sprühbalken (10, 11) durch ein elastisches Element (12, 14) mit dem Rahmen (3) verbunden ist.

6. Sprühvorrichtung nach Anspruch 5, **dadurch gekennzeichnet, dass** der sich nach innen erstreckende Balkenabschnitt (11) mindestens eines Sprühbalkens (10, 11) durch ein elastisches Element (12, 14) mit dem Rahmen (3) verbunden ist.

7. Sprühvorrichtung nach einem der Ansprüche 4 bis 6, **dadurch gekennzeichnet, dass** das elastische Element (12, 14) eines der folgenden Elemente oder eine Kombination derselben ist: eine Dämpfungsvorrichtung, eine Drehfeder, eine Druckfeder, eine Spannfeder, ein hydraulisches und/oder pneumatisches Element.

8. Sprühvorrichtung nach einem der vorhergehenden Ansprüche, **dadurch gekennzeichnet, dass** der Rahmen (3) lösbar mit einem Fahrzeug (1) verbunden ist.

9. Sprühvorrichtung nach einem der Ansprüche 1 bis 7, **dadurch gekennzeichnet, dass** der Rahmen (3) ein in ein Fahrzeug (1) integrierter Teil ist.

## Revendications

1. Dispositif de pulvérisation destiné à être relié à un véhicule, comprenant un châssis (3) et une paire de rampes de pulvérisation (10, 11) supporté par et s'étendant extérieurement de ce châssis (3), dans lequel les rampes de pulvérisation (10, 11) sont montées de manière à pouvoir pivoter sur un châssis (3) autour d'axes de pivotement (4, 5) s'étendant sensiblement verticalement, **caractérisé en ce que** les rampes de pulvérisation (10, 11) sont liées de façon à ce qu'un mouvement de pivotement de l'une des rampes de pulvérisation (10, 11) autour de son axe de pivotement (4, 5) dans une direction de rotation entraîne un mouvement de pivotement de l'autre rampe de pulvérisation (10, 11) autour de son axe de pivotement (4, 5) dans la direction de rotation opposée.

2. Dispositif de pulvérisation selon la revendication 1, **caractérisé en ce que** la liaison entre les rampes de pulvérisation (10, 11) est configurée pour permettre un mouvement de pivotement des rampes de pulvérisation (10, 11) l'une par rapport à l'autre.

3. Dispositif de pulvérisation selon la revendication 1 ou 2, **caractérisé en ce que** les rampes de pulvérisation (10, 11) sont équipées d'une section de rampe principale (10) s'étendant extérieurement de l'axe de pivotement (4, 5) respectif et d'une rampe s'étendant intérieurement dudit axe de pivotement, dans lequel les sections de rampes (11) s'étendant intérieurement sont reliées l'une à l'autre de manière articulée.

4. Dispositif de pulvérisation selon la revendication 3, **caractérisé en ce que** les sections de rampes (11) s'étendant intérieurement sont reliées l'une à l'autre par un élément élastique (12, 14).

5. Dispositif de pulvérisation selon la revendication 3 ou 4, **caractérisé en ce qu'**au moins une des rampes de pulvérisation (10, 11) est reliée au châssis (3) au moyen d'un élément élastique (12, 14).

6. Dispositif de pulvérisation selon la revendication 5, **caractérisé en ce que** la section de rampe (11) s'étendant intérieurement d'au moins une des rampes de pulvérisation (10, 11) est reliée au châssis au moyen d'un élément élastique (12, 14).

7. Dispositif de pulvérisation selon l'une quelconque des revendications 4-6, **caractérisé en ce que** l'élément élastique (12, 14) est un élément ou une combinaison des éléments suivants : dispositif amortisseur, ressort de torsion, ressort de compression, ressort de tension, élément hydraulique et/ou pneumatique.

8. Dispositif de pulvérisation selon l'une quelconque des revendications précédentes, **caractérisé en ce que** le châssis (3) est relié à un véhicule (1) de manière à pouvoir en être détaché.

9. Dispositif de pulvérisation selon l'une quelconque des revendications 1-7, **caractérisé en ce que** le châssis (3) est une partie intégrante d'un véhicule (1).
